# EUROPÄISCHE PATENTSCHRIFT

(11) **EP 1 784 295 B1**
(45) Veröffentlichungstag und Bekanntmachung des Hinweises auf die Patenterteilung: **15.12.2010**
(21) Anmeldenummer: 05774325.4
(22) Anmeldetag: 19.08.2005
(51) Int. Cl.: B29C 45/16

(54) **SPRITZGIESSMASCHINE**
INJECTION MOLDING MACHINE
MACHINE DE MOULAGE PAR INJECTION

(30) Priorität: 04.09.2004 DE 102004042857
(43) Veröffentlichungstag der Anmeldung: 16.05.2007
(73) Patentinhaber: Ferromatik Milacron Maschinenbau GmbH, D-79364 Malterdingen (DE)
(72) Erfinder: KOCH, Michael, 79100 Freiburg (DE); ZIPSE, Rolf, 79312 Emmendingen (DE)
(74) Vertreter: Grättinger Möhring von Poschinger Patentanwälte Partnerschaft
(86) Internationale Anmeldenummer: PCT/EP2005/008972
(87) Internationale Veröffentlichungsnummer: WO 2006/027093

(56) Entgegenhaltungen:
- WO-A-2005/007381
- DE-A1- 10 214 466
- DE-U1- 20 010 545
- US-A- 4 243 362
- DASSOW J: "FUER ALLE FAELLE GERUESTET, TECHNOLOGIEFUEHRERSCHAFT DURCH MEHRKOMPONENTENTECHNIK" KUNSTSTOFFE, CARL HANSER VERLAG, MUNCHEN, DE, Bd. 92, September 2002 (2002-09), Seiten 105-109, XP002237523 ISSN: 0023-5563

## Beschreibung

Die vorliegende Erfindung betrifft eine Spritzgießmaschine in Drei-Platten-Bauweise mit einer ersten Formaufspannplatte, einer zweiten, längs der Maschinenachse bewegbaren Formaufspannplatte, einer Endplatte, einer auf die zweite Formaufspannplatte wirkenden Schließeinheit und mindestens zwei Spritzeinheiten, von denen eine erste dazu ausgelegt ist, durch einen Düsendurchbruch in der ersten Formaufspannplatte hindurch in ein auf dieser aufgespanntes Teilwerkzeug einzuspritzen, während die zweite Spritzeinheit der zweiten Formaufspannplatte zugeordnet, in einer gemeinsam mit dieser verführbaren Tragstruktur gelagert und dazu ausgelegt ist, in ein auf der zweiten Formaufspannplatte aufgespanntes Teilwerkzeug einzuspritzen.

Zur Herstellung von mehreren Spritzgießteilen während jeweils eines Zyklus' und/oder zur Herstellung von mehrere Komponenten umfassenden Spritzgießteilen sind - beispielsweise aus der GB 2300142 A - gattungsgemäße, mehrere Spritzeinheiten aufweisende Spritzgießmaschinen in Drei-Platten-Bauweise bekannt, bei denen zwei einander gegenüberstehende Spritzeinheiten in unterschiedliche Teilwerkzeuge einspritzen können, wobei eine der beiden Spritzeinheiten entsprechend der Öffnungs- und Schließbewegung der Spritzgießmaschine mit der zweiten Formaufspannplatte mitfährt. Für Zwei-Platten-Spritzgießmaschinen sind vergleichbare Anordnungen einer mit der bewegbaren Formaufspannplatte mitfahrenden zweiten Spritzeinheit ebenfalls bekannt, und zwar nicht nur aus der GB 2300142 A sondern auch aus der EP 1048431 A1. Im Hinblick auf möglichste kurze Zykluszeiten ist eine solche Konzeption, bei der zum Öffnen des Werkzeugs die zweite Spritzeinheit nicht von dem zugeordneten Teilwerkzeug abgehoben zu werden braucht, solchen Spritzgießmaschinen überlegen, bei denen die mindestens eine in das der zweiten Formaufspannplatte zugeordnete Teilwerkzeug einspritzende Spritzeinheit an einer ortsfesten, insbesondere einer starr mit der ersten Formaufspannplatte verbundenen Tragstruktur gelagert ist (vgl. z.B. JP 61-185424 und DE 10214466 A1) und bei denen demgemäß zum Öffnen des Werkzeugs die betreffende Spritzeinheit vor dem Öffnen des Werkzeugs abgehoben werden muß; allerdings führt bei der bekannten gattungsgemäßen Spritzgießmaschine und vergleichbar aufgebauten Spritzgießmaschinen in Zwei-Platten-Bauweise die Anordnung der zweiten Spritzeinheit häufig zu einer unerwünschten Beschränkung, was die Möglichkeiten der Anordnung weiterer Aggregate (z.B. Auswerfer, Schließzylinder, Kernzüge u. dgl.) im Bereich der der Form abgewandten Seite der zweiten Formaufspannplatte angeht. Dies wirkt sich auch negativ auf die Möglichkeit aus, Spritzgießmaschinen mit unterschiedlichen technischen Ausstattungen nach dem Baukastenprinzip zu konfektionieren.

Die US-A-4243362 zeigt eine Spritzgießmaschine nach dem Oberbegriff von Anspruch 1.

Aus der WO 2005/007381 A2, die prioritätsälter als die vorliegende Anmeldung, jedoch nachveröffentlicht ist, ist eine in Drei-Platten-Bauweise ausgeführte Spritzgießmaschine bekannt, bei der eine gemeinsam mit der zweiten, bewegbaren Formaufspannplatte längs der Maschinenachse verfahrbare zweite Spritzeinheit zur Abtragung der Düsenanlagekraft bei geschlossener Form direkt mit dem der bewegbaren Formaufspannplatte zugeordneten Teilwerkzeug über kurze Lastpfade verbunden ist. Die zweite Spritzeinheit stützt sich dabei auf einer Traverse ab, die auf den Holmen der Spritzgießmaschine verschiebbar geführt ist.

Die vorliegende Erfindung ist darauf gerichtet, eine gattungsgemäße Spritzgießmaschine bereitzustellen, welche die weiter oben dargelegten Nachteile bekannter gattungsgemäßer Spritzgießmaschinen nicht aufweist. Insbesondere soll demgemäß eine Spritzgießmaschine gattungsgemäßer Art bereitgestellt werden, die sich bei der Möglichkeit, mit besonders kurzen Zykluszeiten zu arbeiten, sowie günstigen statischen Verhältnissen durch möglichst geringe Beschränkungen hinsichtlich der Anordnung weiterer Aggregate im Bereich der der Form abgewandten Seite der zweiten Formaufspannplatte auszeichnet.

Gelöst wird diese Aufgabenstellung gemäß der vorliegenden Erfindung durch die Merkmale von Patentanspruch 1. Charakteristisch für die Spritzgießmaschine nach der vorliegenden Erfindung ist somit zum einen, daß die zweite, mit der zweiten, bewegbaren Formaufspannplatte mitfahrende Spritzeinheit randseitig, nahe der äußeren Kontur an der bewegbaren Formaufspannplatte positioniert ist, indem deren Düse in der Einspritzposition entfernt von der Maschinenachse angeordnet ist, wobei in Abstimmung mit dieser Positionierung der zweiten Spritzeinheit die zweite, bewegbare Formaufspannplatte keinen Düsendurchbruch aufweist. Dies ermöglicht es insbesondere, zur Herstellung von Spritzgießmaschinen mit und ohne zweiter Spritzeinheit im Sinne einer Baukasten-Konfiguration identische bewegbare Formaufspannplatten einzusetzen. Mehr noch, es lassen sich sogar unter bestimmten Voraussetzungen bestehende Spritzgießmaschinen ohne zweite Spritzeinheit mit nur geringem Aufwand zu solchen nach der vorliegenden Erfindung umrüsten. Dies ist, nachdem ein Austausch der zweiten, bewegbaren Formaufspannplatte hierfür nicht erforderlich ist, ohne Eingriff in die Statik des Gesamtsystems möglich und macht somit keine weiteren Adaptionen der Spritzgießmaschine erforderlich. Daß Spritzgießmaschinen mit und ohne zweiter Spritzeinheit mit identischen zweiten, bewegbaren Formaufspannplatten ausgestattet sein können, ist dabei nicht nur im Hinblick auf die beschriebenen Vorteile (Umrüstbarkeit sowie Baukastenfertigung) günstig; auch unter statischen Gesichtspunkten sind Formaufspannplatten ohne Düsendurchbrüche entschieden günstiger als solche mit Düsendurchbrüchen, was sich insbesondere auch vorteilhaft auf die Abmessungen sowie das Gewicht der zweiten, bewegbaren Formaufspannplatte auswirkt. Ebenfalls im Hinblick auf günstige statische Verhältnisse innerhalb der Maschine ist es von Vorteil, daß sich die Tragstruktur(en) für die mindestens eine zweite Spritzeinheit erfindungsgemäß auf der Endplatte abstützt/abstützen. Durch die erfindungsgemäße Anordnung der zweiten, Spritzeinheit steht im übrigen der Raum an der der Form abgewandten Seite der zweiten, bewegbaren Formaufspannplatte ohne Einbuße für die Anordnung weiterer Aggregate der Spritzgießmaschinen zur Verfügung, was günstig ist im Hinblick auf möglichst flexible Gestaltungsmöglichkeiten. Und die zweite Spritzeinheit ist frei zugänglich, was die Durchführung von Wartungsarbeiten erleichtert. Durch die schräge Anordnung der zweiten Spritzeinheit mit einer einen spitzen Winkel, der bevorzugt zwischen 20° und 60°, besonders bevorzugt zwischen 30° und 50° beträgt, mit der Maschinenachse einschließenden Orientierung hält sich im übrigen die Verlagerung des Massenschwerpunkts des bewegten Teilsystems (zweite, bewegbare Formaufspannplatte samt der zugeordneten, mitbewegten Spritzeinheit(en)) gegenüber der Maschinenachse in einem vertretbaren Rahmen, so daß die beim Öffnen und Schließen des Werkzeugs auftretenden asymmetrischen Kräfte und Momente auch im Falle von vergleichsweise hohen Schließgeschwindigkeiten in einem beherrschbaren Rahmen bleiben.

Im Hinblick auf besonders günstige statische Verhältnisse ist es von Vorteil, wenn, sofern der zweiten, bewegbaren Formaufspannplatte zwei zweite Spritzeinheiten zugeordnet sind, diese an einander bezüglich der Maschinenachse mehr oder weniger diametral gegenüberliegenden Positionen angeordnet sind. Denn die hierdurch mögliche Lage des Massenschwerpunkts des bewegten Teilsystems auf oder nahe an der Maschinenachse führt zu besonders günstigen symmetrischen Belastungen der Maschinenkomponenten mit der Folge eines geringstmöglichen Verschleißes.

Eine andere bevorzugte Weiterbildung der Erfindung zeichnet sich dadurch aus, daß sich die Tragstruktur für die mindestens eine zweite Spritzeinheit über Linearführungen auf der Endplatte abstützt. Auf diese Weise läßt sich die Erfindung bei besonders günstigen statischen Verhältnissen innerhalb der Maschine mit minimalem apparativem Aufwand umsetzen.

Eine weitere bevorzugte Weiterbildung der erfindungsgemäßen Spritzgießmaschine zeichnet sich dadurch aus, daß in ihr ein Werkzeug aufgenommen ist, dessen auf der zweiten, bewegbaren Formaufspannplatte aufgespanntes Teilwerkzeug in der Richtung, in der die zweite Spritzeinheit gegenüber der Maschinenachse versetzt ist, über die zweite, bewegbare Formaufspannplatte übersteht. Dabei mündet der der zweiten Spritzeinheit zugeordnete Angußkanal besonders bevorzugt in dem Überstand des entsprechenden Teilwerkzeugs gegenüber der zugeordneten Formaufspannplatte. Letztere braucht in diesem Falle noch nicht einmal eine randseitige Ausnehmung für die zweite Spritzeinheit aufzuweisen, was sich im Hinblick auf die Statik der zweiten, bewegbaren Formaufspannplatte und somit auf deren Masse günstig auswirkt.

Gemäß einer anderen bevorzugten Weiterbildung der Erfindung ist vorgesehen, daß zwei zweite Spritzeinheiten in Tandemanordnung in derselben Tragstruktur gelagert vorgesehen sind. Hierdurch lassen sich die bewegten Massen reduzieren verglichen mit solchen Spritzgießmaschinen, bei denen zwei zweite Spritzeinheiten in zwei getrennten Tragstrukturen gelagert sind. Die beiden zweiten Spritzeinheiten können dabei parallel zueinander ausgerichtet sein; zwingend ist dies jedoch nicht, da die beiden Spritzeinheiten mit gleichem Vorteil beispielsweise auch zueinander konvergierend ausgeführt sein können.

Lediglich zur Klarstellung ist darauf hinzuweisen, daß die vorliegende Erfindung keineswegs beschränkt ist auf solche Spritzgießmaschinen, bei denen die mindestens eine zweite Spritzeinheit obenliegend angeordnet ist. Im übrigen ist darauf hinzuweisen, daß als Endplatte im Rahmen der vorliegenden Erfindung jegliches (plattenförmiges, rahmenförmiges oder auf sonstige geeignete Weise ausgeführtes, feststehendes oder bewegbares) Bauteil zu verstehen ist, mit dem holmartige Elemente der Spritzgießmaschine entfernt von der Formaufspannplatte verbunden sind, um die Gesamtstruktur auszusteifen. Weiterhin gilt es festzuhalten, daß die zweite, bewegbare Formaufspannplatte nach der vorliegenden Erfindung zwar keinen Düsendurchbruch aufweist; eine in Abhängigkeit von der spezifischen Nutzung ausgeführte, mehr oder weniger ausgeprägte randseitige Aussparung kann die zweite, bewegbare Formaufspannplatte indessen durchaus aufweisen. Schließlich ist festzustellen, daß die erste Formaufspannplatte in Abhängigkeit von dem Gesamtkonzept der Spritzgießmaschine feststehend oder aber bewegbar ausgeführt sein kann, und daß im Rahmen der vorliegenden Erfindung zwischen der ersten Formaufspannplatte und der zweiten, bewegbaren Formaufspannplatte weitere als solches bekannte Einbauten vorgesehen sein können.

Weitere Vorteile sowie besonders günstige Weiterbildungen der vorliegenden Erfindung ergeben sich aus der nachstehenden Beschreibung eines bevorzugten Ausführungsbeispiels sowie den Unteransprüchen.

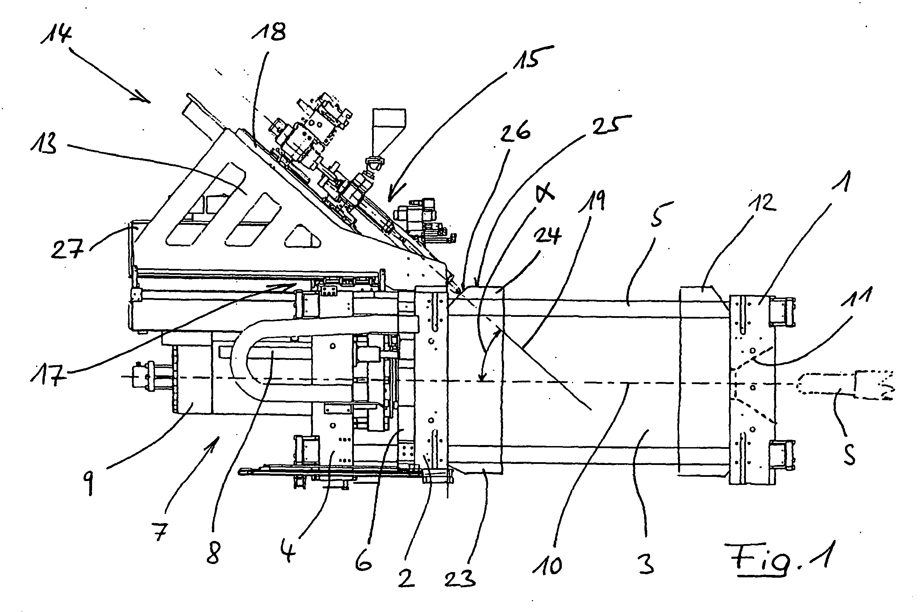

Im folgenden wird die vorliegende Erfindung anhand eines in der Zeichnung veranschaulichten bevorzugten Ausführungsbeispiels näher erläutert. Dabei zeigt
- Fig. 1: eine in Drei-Platten-Bauweise ausgeführte erfindungsgemäße Spritzgießmaschine (ohne er- ste Spritzeinheit) bei offener zweiter, be- wegbarer Formaufspannplatte in Seitenansicht,

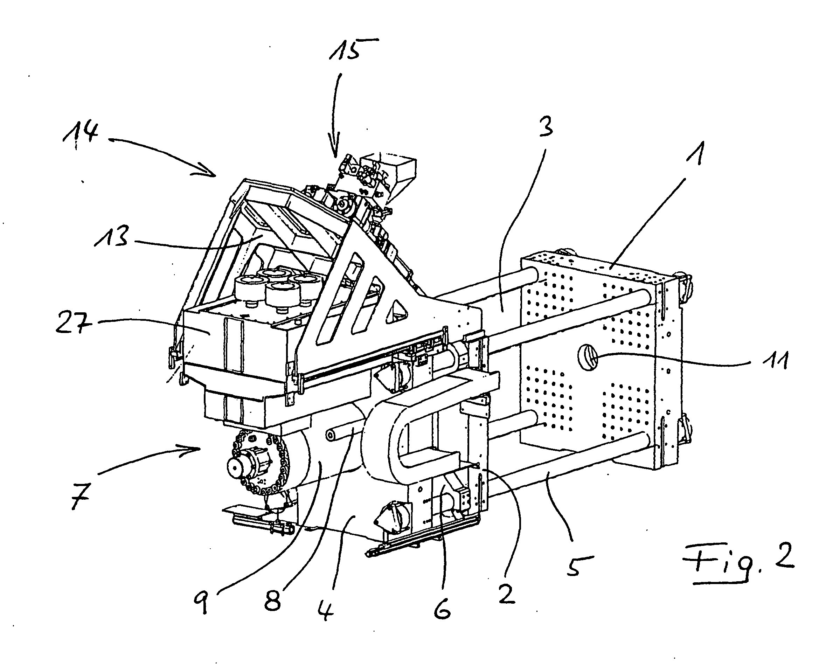

- Fig. 2: die Spritzgießmaschine nach Fig. 1 (ohne Werkzeug) in perspektivischer Ansicht von schräg hinten rechts und

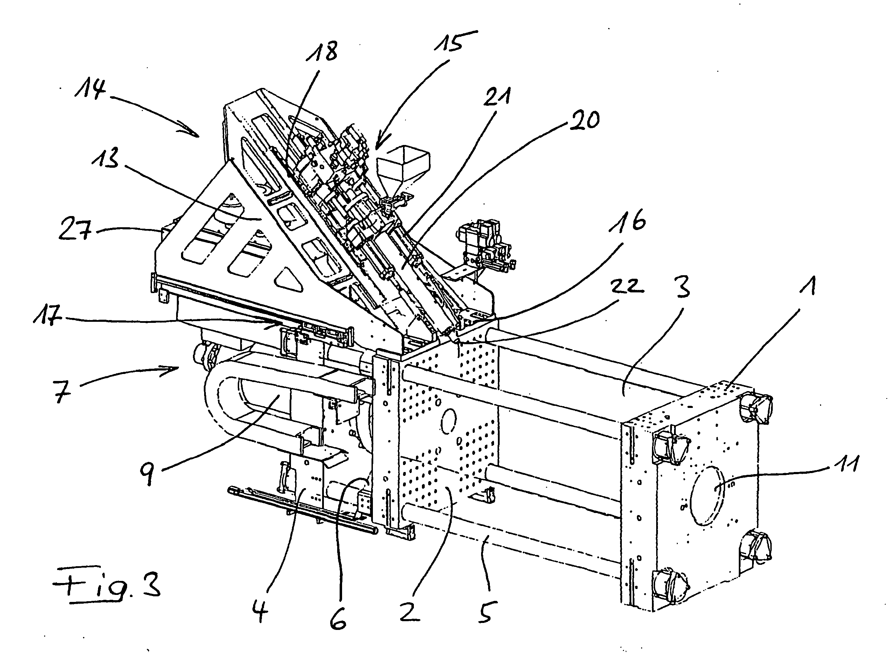

- Fig. 3: die Spritzgießmaschine nach den Fig. 1 und 2 (ohne Werkzeug) in perspektivischer Ansicht von schräg vorne rechts.

Eine Spritzgießmaschine mit dem in der Zeichnung veranschaulichten Aufbau umfaßt in als solches bekannter Weise eine erste, feststehende Formaufspannplatte 1 und eine zweite, bewegbare Formaufspannplatte 2, welche den Werkzeugeinbauraum 3 begrenzen, sowie eine Endplatte 4. Diese ist mit der ersten, feststehenden Formaufspannplatte 1 über vier Holme 5, auf denen die zweite, bewegbare Formaufspannplatte 2 samt der zugeordneten Druckplatte 6 geführt ist, verbunden. Auf die zweite, bewegbare Formaufspannplatte 2 wirkt eine Schließeinheit 7, umfassend zwei Eilgang-Hydraulikzylinder 8 und einen Zylinder 9 für den Schließkraftaufbau. Auf eine detaillierte Darstellung der Schließeinheit 7 wird in Anbetracht dessen, daß sie in jeder als solches bekannten Weise ausgeführt sein kann, verzichtet. Entsprechendes gilt für den als solches bekannten Auswerfer. Und auch die der ersten, feststehenden Formaufspannplatte 1 zugeordnete, auf der Maschinenachse 10 angeordnete ersten Spritzeinheit S, welche dazu bestimmt ist, durch den mittig in der ersten, feststehenden Formaufspannplatte 1 angeordneten Düsendurchbruch 11 hindurch in das zugeordnete Teilwerkzeug 12 einzuspritzen und in jeder als solches bekannten Bauweise ausgeführt sein kann, ist nur angedeutet.

Auf der zweiten, bewegbaren Formaufspannplatte 2 ist eine als Konsole 13 ausgeführte Tragstruktur 14 für eine obenliegende, zweite Spritzeinheit 15 angebracht. Hierzu ist die Konsole 13 über Montageplatten 16, die mit der zweiten, bewegbaren Formaufspannplatte 2 an deren oberer Seitenfläche verschraubt sind, mit der bewegbaren Formaufspannplatte fest verbunden. An der Endplatte 3 stützt sich die Konsole über zwei Linearführungen 17 ab.

Die Konsole 13 trägt zwei Führungen 18, an denen die zweite Spritzeinheit 15, deren Achse 19 mit der Maschinenachse 10 einen Winkel α von 40° einschließt, längs ihrer Achse 19 verschiebbar geführt ist. Seitlich des Zylinders 20 sind entsprechende Hydraulikaggregate 21 angeordnet, mittels derer die Düse 22 der zweiten Spritzeinheit 15 zur Anlage an das der zweite, bewegbaren Formaufspannplatte 2 zugeordnete Teilwerkzeug 23 vorgespannt wird.

Wie dies in der Zeichnung schematisch veranschaulicht ist, steht das auf der zweiten, bewegbaren Formaufspannplatte 2 aufgespanntes Teilwerkzeug 23 nach oben über die bewegbare Formaufspannplatte 2 über. Der zum Zusammenwirken mit der zweiten Spritzeinheit 15 bestimmte Angußkanal mündet dabei in dem Überstand 24 des Teilwerkzeugs 23 über die zweite, bewegbare Formaufspannplatte 2, und zwar im Bereich einer angrenzend an den oberen Rand 25 angeordneten Anlagefläche 26, die senkrecht steht auf der Achse 19 der zweiten Spritzeinheit.

Unter der Konsole 13 ist ein Nachsaugtank 27 für die Schließeinheit 7 angeordnet.

## Patentansprüche

1. Spritzgießmaschine in Drei-Platten-Bauweise mit einer ersten Formaufspannplatte (1), einer zweiten, längs der Maschinenachse (10) bewegbaren Formaufspannplatte (2), einer Endplatte, einer auf die zweite Formaufspannplatte wirkenden Schließeinheit (7) und mindestens zwei Spritzeinheiten (S, 15), von denen eine erste dazu ausgelegt ist, durch einen Düsendurchbruch (11) in der ersten Formaufspannplatte (1) hindurch in ein auf dieser aufgespanntes Teilwerkzeug (12) einzuspritzen, während die mindestens eine zweite Spritzeinheit (15) der zweiten Formaufspannplatte (2) zugeordnet, in einer gemeinsam mit dieser verfahrbaren Tragstruktur (14) gelagert und dazu ausgelegt ist, in ein auf der zweiten Formaufspannplatte (2) aufgespanntes Teilwerkzeug (23) einzuspritzen,
wobei
die zweite Formaufspannplatte (2) keinen Düsendurchbruch aufweist und die Achse (19) der mindestens einen zweiten Spritzeinheit (19) mit der Maschinenachse (10) einen spitzen Winkel (α) einschließt, **dadurch gekennzeichnet, dass** die Düse (22) der zweiten Spritzeinheit (15) in deren Einspritzposition entfernt von der Maschinenachse (10) am Werkzeug anliegt, und daß die Tragstruktur (14) für die zweite Spritzeinheit (15) sich auf der Endplatte (4) abstützt.

2. Spritzgießmaschine nach Anspruch 1,
**dadurch gekennzeichnet,**
**daß** der Neigungswinkel (α) der zweiten Spritzeinheit (15) gegenüber der Maschinenachse (10) zwischen 20° und 60°, bevorzugt zwischen 30° und 50° beträgt.

3. Spritzgießmaschine nach Anspruch 1 oder Anspruch 2,
**dadurch gekennzeichnet,**
**daß** in ihr ein Werkzeug aufgenommen ist, dessen der zweiten Formaufspannplatte (2) zugeordnetes Teilwerkzeug (23) in der Richtung, in der die zweite Spritzeinheit (15) gegenüber der Maschinenachse (10) versetzt ist, über die zweite Formaufspannplatte (2) übersteht.

4. Spritzgießmaschine nach Anspruch 3,
**dadurch gekennzeichnet,**
**daß** der der zweiten Spritzeinheit (15) zugeordnete Angußkanal in dem der zweiten Formaufspannplatte (2) zugeordneten Teilwerkzeug (23) in dem Überstand (24) des Teilwerkzeugs gegenüber der Formaufspannplatte (2) mündet.

5. Spritzgießmaschine nach Anspruch 4,
**dadurch gekennzeichnet,**
**daß** der Angußkanal im Bereich einer zur Maschinenachse (10) geneigten Anlagefläche (26) mündet, die im wesentlichen senkrecht steht auf der Achse (19) der zweiten Spritzeinheit (15).

6. Spritzgießmaschine nach Anspruch 4 oder Anspruch 5,
**dadurch gekennzeichnet,**
**daß** die zweite Formaufspannplatte (2) für die zweite Spritzeinheit (15) eine randseitige Ausnehmung aufweist.

7. Spritzgießmaschine nach einem der Ansprüche 1 bis 6,
**dadurch gekennzeichnet,**
**daß** zwei in Tandemanordnung ausgeführte zweite Spritzeinheiten (15) vorgesehen sind.

8. Spritzgießmaschine nach einem der Ansprüche 1 bis 7,
**dadurch gekennzeichnet,**
**daß** sich die Tragstruktur (14) für die zweite Spritzheiheit (15) über Linearführungen (17) auf der Endplatte (4) abstützt.

9. Spritzgießmaschine nach einem der Ansprüche 1 bis 8,
**dadurch gekennzeichnet,**
**daß** der zweiten Formaufspannplatte (2) eine Mehrzahl von zweiten, an verschiedenen Seiten der Formaufspannplatte angeordneten Spritzeinheiten (15) zugeordnet sind.

10. Spritzgießmaschine nach einem der Ansprüche 1 bis 9,
**dadurch gekennzeichnet,**
**daß** in einem von der Tragstruktur (14) für die zweite Spritzeinheit (15) umschlossenen Raum ein Nachsaugtank (27) für Hydraulikflüssigkeit untergebracht ist.

11. Spritzgießmaschine nach einem der Ansprüche 1 bis 10,
**dadurch gekennzeichnet,**
**daß** die Tragstruktur (14) für die zweite Spritzeinheit (15) als Konsole (13) ausgeführt ist, die auf der zweiten Formaufspannplatte (2) angebracht ist.

12. Spritzgießmaschine nach einem der Ansprüche 1 bis 11,
**dadurch gekennzeichnet,**
**daß** die erste Formaufspannplatte (1) als feststehende Formaufspannplatte ausgeführt ist.

## Claims

1. An injection moulding machine that has a three platen design and features a first die platen (1), a second die platen (2) that is movable along the machine axis (10), an end platen, a closing unit (7) that acts upon the second die platen and at least two injection units (S, 15), wherein a first of these injection units is designed for injecting into a partial tool (12) fastened to the first die platen (1) through a nozzle opening (11) in the first die platen while the at least one second injection unit (15) is assigned to the second die platen (2), mounted in a supporting structure (14) that can be displaced together with the second die platen and designed for injecting into a partial tool (23) fastened to the second die platen (2), and wherein the second die platen (2) does not feature a nozzle opening and the axis (19) of the at least one second injection unit (19) includes an acute angle (α) with the machine axis (10),
**characterized in**
**that** the nozzle (22) of the second injection unit (15) contacts the tool at a distance from the machine axis (10) in its injecting position, and in that the supporting structure (14) for the second injection unit (15) is supported on the end platen (4).

2. The injection moulding machine according to Claim 1,
**characterized in**
**that** the angle of inclination (α) of the second injection unit (15) relative to the machine axis (10) lies between 20° and 60°, preferably between 30° and 50°.

3. The injection moulding machine according to Claim 1 or Claim 2,
**characterized in**
**that** it accommodates a tool, the partial tool (23) of which that is assigned to the second die platen (2) protrudes over the second die platen (2) in the direction, in which the second injection unit (15) is offset relative to the machine axis (10).

4. The injection moulding machine according to Claim 3,
**characterized in**
**that** the sprue channel assigned to the second injection unit (15) leads into the partial tool (23) assigned to the second die platen (2) in the section (24) of the partial tool that protrudes relative to the die platen (2).

5. The injection moulding machine according to Claim 4,
**characterized in**
**that** the sprue channel ends in the region of a contact surface (26) that is inclined relative to the machine axis (10) and essentially extends perpendicular on the axis (19) of the second injection unit (15).

6. The injection moulding machine according to Claim 4 or Claim 5,
**characterized in**
**that** the second die platen (2) features a marginal recess for the second injection unit (15).

7. The injection moulding machine according to one of Claims 1 to 6,
**characterized in**
**that** two second injection units (15) are provided in the form of a tandem arrangement.

8. The injection moulding machine according to one of Claims 1 to 7,
**characterized in**
**that** the supporting structure (14) for the second injection unit (15) is supported on the end platen (4) by means of linear guides (17).

9. The injection moulding machine according to one of Claims 1 to 8,
**characterized in**
**that** a plurality of second injection units (15) is assigned to the second die platen (2) and arranged on different sides of the die platen.

10. The injection moulding machine according to one of Claims 1 to 9,
**characterized in**
**that** a feeder tank (27) for hydraulic fluid is accommodated in a space enclosed by the supporting structure (14) for the second injection unit (15).

11. The injection moulding machine according to one of Claims 1 to 10,
**characterized in**
**that** the supporting structure (14) for the second injection unit (15) is realized in the form of a console (13) that is arranged on the second die platen (2).

12. The injection moulding machine according to one of Claims 1 to 11,
**characterized in**
**that** the first die platen (1) is realized in the form of a stationary die platen.

## Revendications

1. Presse d'injection de type à trois plaques, avec une première plaque de bridage du moule (1), une deuxième plaque de bridage du moule (2) mobile le long de l'axe de la machine (10) une plaque d'extrémité, une unité de fermeture (7) agissant sur la deuxième plaque de bridage du moule et au moins deux unités d'injection (S, 15), dont l'une est conçue pour injecter à travers un passage de tuyère (11) en traversant la première plaque de bridage du moule (1) dans un outil partiel (12) bridé sur cette dernière, alors que l'au moins une deuxième unité d'injection (15) est associée à la deuxième plaque de bridage du moule (2), logée dans une structure porteuse (14) déplaçable en commun avec celle-ci et conçue pour injecter dans un outil partiel (23) bridé sur la deuxième plaque de bridage du moule (2), la deuxième plaque de bridage du moule (2) ne comportant aucun passage de tuyère et l'axe (19) de l'au moins une deuxième unité d'injection (19) formant avec l'axe de la machine (10) un angle aigu (α),
**caractérisée en ce que**, dans sa position d'injection éloignée de l'axe de la machine (10), la tuyère (22) de la deuxième unité d'injection (15) est adjacente à l'outil et **en ce que** la structure porteuse (14) pour la deuxième unité d'injection (15) s'appuie sur la plaque d'extrémité (4).

2. Presse d'injection selon la revendication 1, **caractérisée en ce que** l'angle d'inclinaison (α) de la deuxième unité d'injection (15) par rapport à l'axe de la machine (10) est compris entre 20° et 60°, de préférence entre 30° et 50°.

3. Presse d'injection selon la revendication 1 ou la revendication 2, **caractérisée en ce qu'**en elle est logé un outil, dont l'outil partiel (23) associé à la deuxième plaque de bridage de moule (2) déborde par dessus la deuxième plaque de bridage de moule (2) dans la direction, dans laquelle la deuxième unité d'injection (15) est déportée par rapport à l'axe de la machine (10).

4. Presse d'injection selon la revendication 3, **caractérisée en ce que** le canal de carotte associé à la deuxième unité d'injection (15) débouche dans l'outil partiel (23) associé à la deuxième plaque de bridage du moule (2), dans le débordement (24) de l'outil partiel par rapport à la plaque de bridage du moule (2).

5. Presse d'injection selon la revendication 4, **caractérisée en ce que** le canal de carotte débouche dans la région d'une surface d'appui (26) inclinée vers l'axe de la machine (10) qui se dresse sensiblement à la verticale sur l'axe (19) de la deuxième unité d'injection (15).

6. Presse d'injection selon la revendication 4 ou la revendication 5, **caractérisée en ce que** la deuxième plaque de bridage du moule (2) pour la deuxième unité d'injection (15) comporte un évidement marginal.

7. Presse d'injection selon l'une quelconque des revendications 1 à 6, **caractérisée en ce que** deux deuxièmes unités d'injection (15) disposées en tandem sont prévues.

8. Presse d'injection selon l'une quelconque des revendications 1 à 7, **caractérisée en ce que** la structure porteuse (14) pour la deuxième unité d'injection (15) s'appuie sur la plaque d'extrémité (4) par l'intermédiaire de guidages linéaires (17).

9. Presse d'injection selon l'une quelconque des revendications 1 à 8, **caractérisée en ce que** qu'il est associé à la deuxième plaque de bridage du moule (2) une pluralité de deuxièmes unités d'injection (15) disposées sur différentes faces de la plaque de bridage du moule.

10. Presse d'injection selon l'une quelconque des revendications 1 à 9, **caractérisée en ce que** dans un espace entouré par la structure porteuse (14) pour la deuxième unité d'injection (15) est disposée une citerne de ré-aspiration (27) pour du liquide hydraulique.

11. Presse d'injection selon l'une quelconque des revendications 1 à 10, **caractérisée en ce que** la structure porteuse (14) pour la deuxième unité d'injection (15) est réalisée sous forme de console (13) qui est montée sur la deuxième plaque de bridage du moule (2).

12. Presse d'injection selon l'une quelconque des revendications 1 à 11, **caractérisée en ce que** la première plaque de bridage du moule (1) est réalisée sous la forme d'une plaque stationnaire de bridage du moule.
